# EUROPÄISCHE PATENTSCHRIFT

(11) **EP 1 371 867 B1**
(45) Veröffentlichungstag und Bekanntmachung des Hinweises auf die Patenterteilung: **22.04.2009**
(21) Anmeldenummer: 02013205.6
(22) Anmeldetag: 15.06.2002
(51) Int. Cl.: F16D 13/64

(54) **Mitnehmerscheibe für Lamellenkupplungssysteme**
Driving disk for multi-plate friction clutch
Plateau d'entraînement pour embrayage multi-disques

(43) Veröffentlichungstag der Anmeldung: 17.12.2003
(73) Patentinhaber: BorgWarner, Inc., Auburn Hills, MI 48326-2872 (US)
(72) Erfinder: Bauer, Karl-Heinz, 76676 Graben-Neudorf (DE); Günter, Frank, Dr., 76228 Karlsruhe (DE); Heinrich, Johannes, Dr., 61381 Friedrichsdorf (DE); Weiss, Robert, Dr., 68723 Schwetzingen (DE)
(74) Vertreter: Patentanwälte Westphal, Mussgnug & Partner

(56) Entgegenhaltungen:
- US-A- 3 803 872
- US-A- 6 044 948
- US-B1- 6 210 280
- US-B2- 6 397 997

## Beschreibung

Die Erfindung betrifft eine Mitnehmerscheibe für Lamellenkupplungssysteme gemäß dem Oberbegriff der Ansprüche 1 und 9.

Gemäß dem Stand der Technik wird die Antriebsanbindung von Lamellenkupplungssystemen, insbesondere von Doppelkupplungen, mittels einer sogenannten Mitnehmerscheibe verwirklicht. Eine derartige Mitnehmerscheibe weist eine Außenverzahnung auf. Diese Außenverzahnung, welche in der Fachsprache auch Steckverzahnung genannt wird, ist in eine Innenverzahnung des Kupplungsgehäuses eingesetzt. Bedingt durch axiales Spiel in der Vorzahnung kann es zu Klappergeräuschen kommen. Ein Weg zu deren Verringerung ist in US 6,044,948 beschrieben. Aufgrund des vorhandenen Flankenspieles der Verzahnung kann es durch Schwingungsanregung beispielsweise durch den Verbrennungsmotor zu weiteren Klappergeräuschen kommen. Diese weiteren Klappergeräusche entstehen insbesondere im Leerlauf des Motors durch den Flankenwechsel der Verzahnung innerhalb des Verzahnungsspiels. Die Anregung zur Schwingung erfolgt dabei durch die Drehungleichförmigkeit des Verbrennungsmotors. Insbesondere bei Dieselmotoren wurde eine erhöhte Tendenz zur Schwingungsanregung beobachtet, welche das vorgenannte weitere Klappergeräusch verursacht.

Der Erfindung liegt nunmehr die Aufgabe zugrunde, eine Mitnehmerscheibe an sich bekannter Art derart auszugestalten und weiterzubilden, dass ein derartiges weiteres Klappergeräusch nicht mehr auftritt oder zumindest in der Lautstärke deutlich reduziert ist.

Diese Aufgabe wird durch eine gattungsgemäße Mitnehmerscheibe für Lamellenkupplungssysteme mit den Merkmalen des kennzeichnenden Teils des Anspruchs 1 sowie den Merkmalen des kennzeichnenden Teils des Anspruchs 9 erfindungsgemäß gelöst.

Vorteilhafte Ausführungen und Weiterbildungen der Erfindung sind in Unteransprüchen angegeben.

Die Erfindung geht ganz allgemein von einer Mitnehmerscheibe für Lamellenkupplungssysteme an sich bekannter Art aus, welche eine zum Einsetzen in eine Innenverzahnung eines Kupplungsgehäuses vorgesehene Außenverzahnung aufweisen, und welche eine Mehrzahl von in im Wesentlichen gleichem Abstand zueinander an dem Außenumfang der Mitnehmerscheibe angeordnete Zähne aufweist. Der wesentliche Gedanke der Erfindung besteht darin, das Flankenspiel der Mitnehmerscheibe in dem Kupplungsgehäuse deutlich zu reduzieren. Zu diesem Zweck sieht die Erfindung vor, dass wenigstens ein Zahn in Umfangsrichtung versetzt angeordnet ist. Neben einer Verhinderung von Klappergeräuschen wird auch erreicht, dass Verschleißerscheinungen vermieden werden und dass die Verzahnung einschlägt.

Vorteilhafterweise ist der wenigstens eine Zahn in Richtung einer an der Mitnehmerscheibe angreifenden Schubkraft versetzt angeordnet. Mit dieser Maßnahme wird erreicht, dass alle miteinander in Wirkverbindung tretenden Zähne von Außen- und Innenverzahnung auch unter Lastaufhebung gegeneinander gedrückt gehalten werden. Ein Auseinanderrücken bei Lastwechsel wird dadurch verhindert.

In einer besonderen Ausgestaltung der Erfindung ist vorge-sehen, dass der wenigstens eine Zahn mindestens um ein maximales Verdrehflankenspiel versetzt angeordnet ist. Diese Maßnahme ist die Mindestanforderung für die Möglichkeit zur vollständigen Elimination von Klappergeräuschen.

Erfindungsgemäß ist fernerhin vorgesehen, dass der wenigstens eine Zahn in Umfangsrichtung elastisch federnd angeordnet ist. Eine elastisch federnde Anordnung ermöglicht in einfacher Weise ein Verspannen der Außenverzahnung der Mitnehmerscheibe mit der Innenverzahnung des Kupplungsgehäuses.

In Ausgestaltung dieser Variante ist vorgesehen, dass die elastisch federnde Anordnung mittels im Wesentlichen radial verlaufender, den wenigstens einen Zahn von dem benachbarten Zähnen trennender Einschnitte in der Mitnehmerscheibe realisiert ist. Diese Variante hat den Vorteil der einfachen Herstellbarkeit in Form eines Blechumformteils. Die Intensität der federnden Wirkung eines solchen versetzt angeordneten Zahnes kann in einfacher Weise durch die Tiefe der trennenden Einschnitte gewählt werden.

Es ist erfindungsgemäß vorgesehen, dass die elastisch federnde Anordnung eine Vorspannung zwischen der Außenverzahnung und der Innenverzahnung hervorrufbar ausgebildet ist. Konkret übersteigt demzufolge die Versetzung des wenigstens einen Zahns den Wert des maximalen Verdrehflankenspiels.

Vorteilhafterweise ist die Vorspannung so gewählt, dass diese ein Leerlaufwechselmoment abstützen kann. Mit Hilfe dieser Ausführungsvariante können jegliche Klappergeräusche im Leerlauf vollständig unterdrückt werden.

Es ist erfindungsgemäß vorgesehen, dass die elastisch fe-dernde Anordnung ein Anliegen der jeweiligen Schubflanken der Zähne der Außenverzahnung an den entsprechenden Flanken der Zähne der Innenverzahnung ermöglichbar ausgestaltet ist, falls das Schubmoment größer als der Schubmomentanteil im Leerlaufbetrieb ist. Unter dieser Prämisse ist ein verlustarmer und verschleißarmer Normalbetrieb möglich.

Eine besonders vorteilhafte Ausgestaltung der vorgenannten Variante besteht darin, eine Montagehilfe vorzusehen, welche ein Einsetzen der Außenverzahnung der Mitnehmerscheibe in die Innenverzahnung des Kupplungsgehäuses erleichtert. Diese Maßnahme ist insbesondere dann erforderlich, wenn die Mitnehmerscheibe unter erhöhter Vorspannung in das Kupplungsgehäuse eingesetzt werden muss.

Eine Montagehilfe der vorgenannten Art lässt sich in besonders einfacher Weise dadurch realisieren, dass eine im Wesentlichen in radialer Richtung innerhalb des wenigstens einen Zahns angeordneten Eingriffsöffnung und eine im Wesentlichen in radialer Richtung innerhalb eines zu dem wenigstens einem Zahn benachbarten Zahns angeordnete Eingriffsöffnung vorgesehen sind, in welche die Spitzen einer Zange oder dergleichen einsetzbar sind und mit deren Hilfe der wenigstens eine Zahn gegen den mit größerem Abstand angeordneten benachbarten Zahn gedrückt werden kann.

Da die Mitnehmerscheibe üblicherweise in Form eines Blechumformteils vorliegt, ist die federnde Wirkung eines in der vorgehend beschriebenen Art und Weise versetzt angeordneten Zahnes begrenzt. Zur Verbesserung der Vorspannfunktion kann anstelle eines oder mehrerer in Umfangsrichtung versetzt angeordneter Zähne eine Federeinrichtung vorgesehen sein. Die Federeinrichtung kann beispielsweise als Spiralfeder, Blattfeder oder ähnliches ausgeführt sein.

Des weiteren besteht die Möglichkeit, einzelne Zähne separat einzusetzen und in Umfangsrichtung beweglich oder mit sehr geringer Steifigkeit anzubinden. Diese separat eingesetzten Zähne können dann wiederum mit einer Federeinrichtung der vorgenannten Art vorgespannt werden.

Drei Ausführungsbeispiele der Erfindung sind in der Zeichnung dargestellt und werden im folgenden näher beschrieben. Es zeigen:
- Figur 1: eine perspektivische Darstellung eines ersten Ausführungsbeispiels einer erfindungsgemäßen außenverzahnten Mitnehmerscheibe
- Figur 2: eine Draufsicht auf die in einer Innenverzahnung eines Kupplungsgehäuses sitzenden erfindungsgemäßen außenverzahnten Mitnehmerscheibe gemäß Figur 1
- Figur 3: ein zweites Ausführungsbeispiel einer erfindungsgemäßen außenverzahnten Mitnehmerscheibe in Draufsicht
- Figur 4: ein drittes Ausführungsbeispiel einer erfindungsgemäßen außenver-zahnten Mitnehmescheibe in Draufsicht.

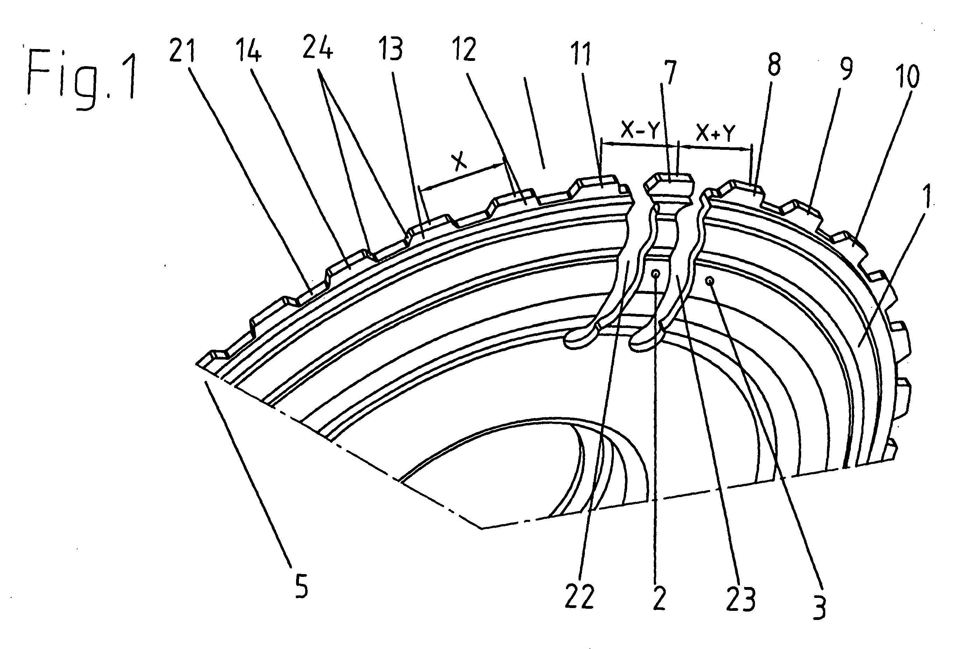

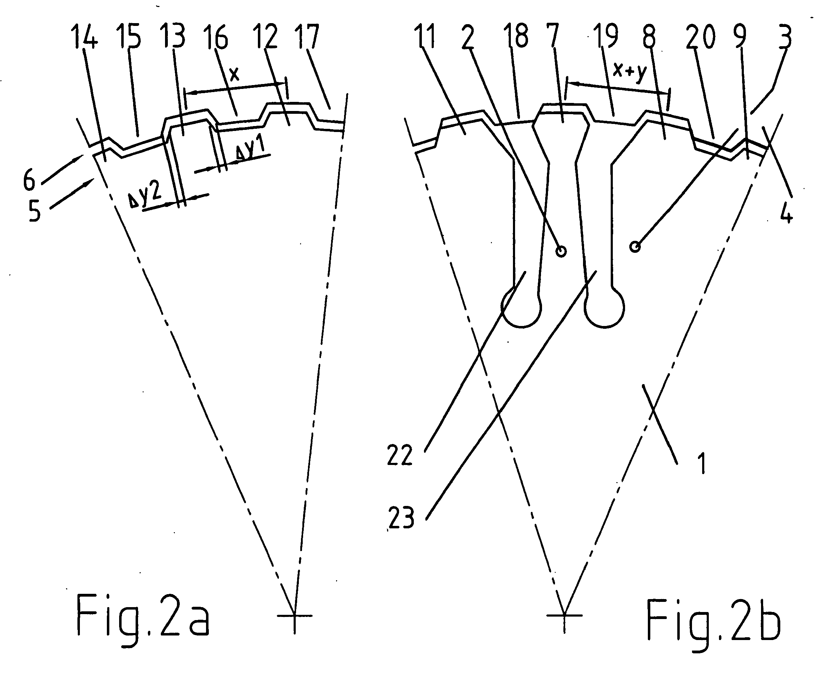

Die Figuren 1 und 2a + b, auf welche nachfolgend Bezug genommen wird, zeigen eine Mitnehmerscheibe für Lamellenkupplungssysteme an sich bekannter Art, welche in erfindunsgemäßer Weise zur Reduktion von Klappergeräuschen ausgebildet ist.

Die im Wesentlichen rotationsymmetrische Mitnehmerscheibe 1 ist im vorliegenden Fall als Blechumformteil ausgebildet. Sie weist eine Außenverzahnung 5 auf, welche eine Mehrzahl von in im Wesentlichen gleichen Abstand x zueinander an dem Außenumfang 21 angeordnete Zähne umfaßt, von denen exemplarisch acht in den Zeichnungsfiguren 1 und 2 durch die Bezugszeichen 7, 8, 9, 10, 11, 12, 13 und 14 gekennzeichnet sind.

Die Außen- oder Steckverzahnung 5 der Mitnehmerscheibe 1 sitzt zur Antriebsanbindung des Lamellenkupplungssystems in der Innenverzahnung 6 des Kupplungsgehäuses 4 des Lamellenkupplungssystems. Dabei greifen die Zähne 7, 8, 9, 10, 11, 12, 13, 14 mit radialem Flankenspiel Δy₁ + Δy₂ in die Zwischenräume benachbarter Zähne 15, 16, 17, 18, 19, 20 der Innenverzahnung 6 des Kupplungsgehäuses 4 des Lamellenkupplungssystems ein. Ein Ausschnitt eines derartigen Eingriffs ist in der Figur 2a im Detail dargestellt.

Erfindungsgemäß ist nunmehr vorgesehen, dass wenigstens ein Zahn in Umfangsrichtung versetzt angeordnet ist. Das Ausführungsbeispiel gemäß den Figuren 1 und 2b weist exakt einen solchen Zahn auf, welcher in den entsprechenden Figuren durch das Bezugszeichen 7 gekennzeichnet ist. Die Versetzung gegenüber den benachbarten Zähnen 8 und 11 weist einen Betrag y auf. Der Abstand dieses versetzten Zahns 7 zu den benachbarten Zähnen 8 und 11 beträgt aufgrund dessen x+y bzw. x-y.

Die Mitnehmerscheibe 1 ist nun derart in das Kupplungsgehäuse 4 eingesetzt, dass der versetzte Zahn 7 in Richtung der an der Mitnehmerscheibe 1 angreifenden Schubkraft versetzt angeordnet ist. Die Versetzung y des Zahns 7 ist dabei so gewählt, dass sie das maximale Verdrehflankenspiel Δy₁ + Δy₂ übersteigt.

In dem vorliegenden Beispiel gemäß den Figuren 1 und 2b ist der versetzte Zahn 7 in Umfangsrichtung elastisch federnd angeordnet. Die elastisch federnde Anordnung wird durch radial verlaufende den Zahn 7 von den benachbarten Zähnen 8 und 11 trennende Einschnitte 22 und 23 realisiert. In Verbindung mit der das maximale Verdrehflankenspiel Δy₁ + Δy₂ übersteigenden Versetzung y ergibt sich eine Vorspannung zwischen der Außenverzahnung 5 der Mitnehmerscheibe 1 und der Innenverzahnung 6 des Kupplungsgehäuses 4. Die Vorspannung ist vorzugsweise gerade so groß gewählt, dass sie das Leerlaufwechselmoment abstützt. Die Versetzung y des Zahns 7 in Richtung der an der Mitnehmerscheibe 1 angreifenden Schubkraft bewirkt, dass im Leerlaufbetrieb alle übrigen Zähne vorgespannt an der Zugflanke anliegen. Im Fahrbetrieb (Schub) können die versetzt angeordneten Zähne über die elastische Gestaltung ein Anliegen an der Schubflanke ermöglichen, falls das Schubmoment größer ist, als der Schubmomentanteil im Leerlaufbetrieb.

Um das Einbringen der Mitnehmerscheibe 1 mit seiner Außenverzahnung 5 in die Innenverzahnung 6 des Kupplungsgehäuses 4 zu erleichtern, ist erfindungsgemäß eine Montagehilfe vorgesehen. Diese Montagehilfe besteht im vorliegenden Ausführungsbeispiel gemäß den Figuren 1 und 2b aus einer in radialer Richtung innerhalb des Zahns 7 angeordneten Eingriffsöffhung 2 und einer weiteren ebenfalls in radialer Richtung zu dem benachbarten Zahn 8 angeordndeten Eingriffsöffnung 3. In diese Eingriffsöffnungen 2,3 können die beiden Enden einer Zange oder dergleichen eingeführt werden. Durch das Schließen der Zange kann die Versetzung y verringert werden, so dass ein Einsetzen der Außenverzahnung 5 der Mitnehmerscheibe in die Innenverzahnung des Kupplungsgehäuses 4 möglich wird.

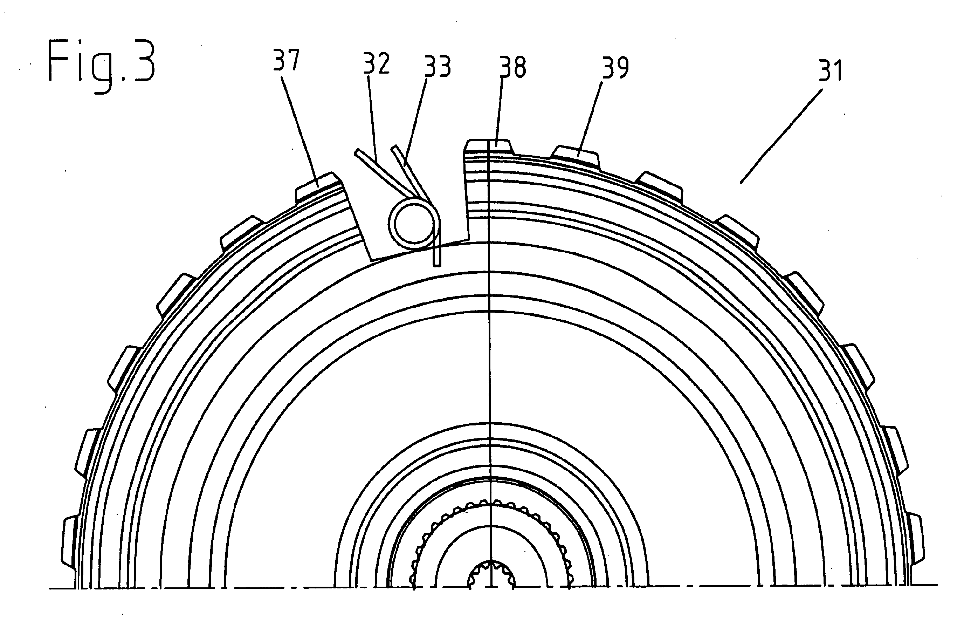

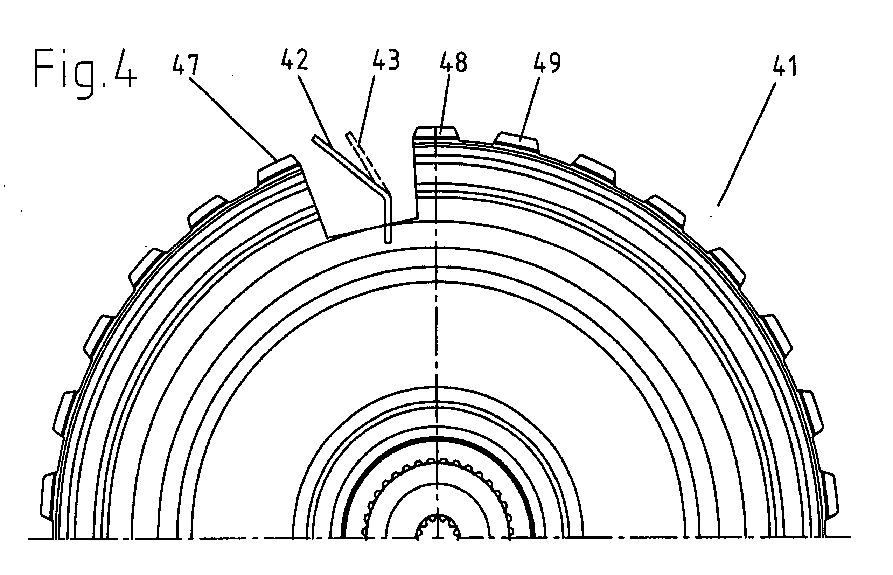

Die Figuren 3 und 4 zeigen weitere Ausführungsvarianten einer erfindungsgemäßen Mitnehmerscheibe 31, 41.

Die Ausführungsvariante gemäß der Figur 3 basiert ebenfalls auf einer Mitnehmerscheibe 31 an sich bekannter Art mit einer Außenverzahnung, welche eine Mehrzahl von in im Wesentlichen gleichen Abstand zueinander an deren Außenumfang angeordneten Zähne aufweist, von denen exemplarisch drei durch die Bezugszeichen 37, 38 und 39 gekennzeichnet sind. Bei der hier vorliegenden Variante ist anstelle eines dieser Zähne eine Spiralfeder 32, 33 eingesetzt. Die Federkraft dieser Spiralfeder 32, 33 wirkt außenumfangsseitig in Umfangsrichtung. Die Außenumfangsseite dieser Spiralfeder kann nun in den Zwischenraum benachbarter Zähne der Innenverzahnung des Kupplungsgehäuses eingreifen und eine Verspannung der Mitnehmerscheibe 31 gegenüber dem Kupplungsgehäuse in Umfangsrichtung hervorrufen. Zur Verdeutlichung der Federwirkung ist in der Figur 3 die Spiralfeder 32, 33 sowohl im entlasteten als auch im verspannten Zustand dargestellt.

Anstelle der Spiralfeder kann wie beispielsweise der Figur 4 zu entnehmen ist, auch eine Blattfeder eingesetzt werden. Die entsprechenden Einzelteile einer derartigen Mitnehmerscheibe 41 sind in der Zeichnungsfigur 4 durch die Bezugszeichen 47, 48 und 49 (exemplarische Zähne) sowie 42 und 43 (Blattfeder im entspannten Zustand bzw. Blattfeder im verspannten Zustand) bezeichnet.

### Bezugszeichenliste

- 1: Mitnehmerscheibe
- 2: Eingriffsöffhung
- 3: Eingriffsöffnung
- 4: Kupplungsgehäuse
- 5: Außenverzahnung
- 6: Innenverzahnung
- 7: Zahn
- 8: Zahn
- 9: Zahn
- 10: Zahn
- 11: Zahn
- 12: Zahn
- 13: Zahn
- 14: Zahn
- 15: Zahn
- 16: Zahn
- 17: Zahn
- 18: Zahn
- 19: Zahn
- 20: Zahn
- 21: Außenumfang
- 22: Einschnitt
- 23: Einschnitt
- 24: Zahnflanke

- 31: Mitnehmerscheibe
- 32: Spiralfeder (unverspannter Zustand)
- 33: Spiralfeder (verspannter Zustand)
- 37: Zahn
- 38: Zahn
- 39: Zahn

- 41: Mitnehmerscheibe
- 42: Blattfeder (unverspannter Zustand)
- 43: Blattfeder (verspannter Zustand)
- 47: Zahn
- 48: Zahn
- 49: Zahn

- Δy₁: Distanz
- Δy₂: Distanz
- Δy₁ + Δy₂: Flankenspiel
- x: Distanz
- y: Distanz

## Patentansprüche

1. Mitnehmerscheibe (1) für Lamellenkupplungssysteme mit einer zum Einsetzen in eine Innenverzahnung (6) eines Kupplungsgehäuses (4) vorgesehenen Außenverzahnung (5), welche eine Mehrzahl von in im Wesentlichen gleichen Abstand (x) zueinander an dem Außenumfang (21) der Mitnehmerscheibe (1) angeordneten Zähne (7, 8, 9, 10, 11, 12, 13, 14) umfasst,
**dadurch gekennzeichnet, dass** wenigstens ein Zahn (7) in Umfangsrichtung um einem Betag y gegenüber benachbarten Zähnen (8,11) versetzt angeordnet ist, wobei Abstände des Zahn (7) zu den benachbarten Zähen (8,11) x+y bzw. x-y betragen.

2. Mitnehmerscheibe (1) nach Anspruch 1,
**dadurch gekennzeichnet, dass** der wenigstens eine Zahn (7) in Umfangsrichtung elastisch federnd angeordnet ist.

3. Mitnehmerscheibe (1) nach Anspruch 2,
**dadurch gekennzeichnet, dass** die elastisch federnde Anordnung mittels im Wesentlichen radial verlaufender den wenigstens einen Zahn (7) von dem benachbarten Zähnen (8, 11) trennender Einschnitte (22, 23) in der Mitnehmerscheibe (1) realisiert ist.

4. Mitnehmerscheibe (1) nach Anspruch 2 oder 3,
**dadurch gekennzeichnet, dass** die elastisch federnde Anordnung eine Vorspannung zwischen der Außenverzahnung (5) und der Innenverzahnung (6) hervorrufbar ausgebildet ist.

5. Mitnehmerscheibe (1) nach Anspruch 4,
**dadurch gekennzeichnet, dass** die Vorspannung ein Leerlaufwechselmoment abstützbar ausgelegt ist.

6. Mitnehmerscheibe (1) nach einem der Ansprüche 2 bis 5,
**dadurch gekennzeichnet, dass** die elastisch federnde Anordnung im Normalbetrieb ein Anliegen der jeweiligen Schubflanken der Zähne (15, 16, 17, 18, 19, 20) der Außenverzahnung (5) an den entsprechenden Schubflanken (24) der Zähne (7, 8, 9, 10, 11, 12, 13, 14) der Innenverzahnung (6) ermöglichbar ausgestaltet ist, falls das Schubmoment größer als das Schubmomentanteil im Leerlaufbetrieb ist.

7. Mitnehmerscheibe (1) nach einem der vorangegangenen Ansprüche,
**dadurch gekennzeichnet, dass** eine Montagehilfe (2, 3) vorgesehen ist, welche ein Einsetzen der Außenverzahnung (5) der Mitnehmerscheibe (1) in die Innenverzahnung (6) des Kupplungsgehäuses (4) erleichtert.

8. Mitnehmerscheibe (1) nach Anspruch 7,
**dadurch gekennzeichnet, dass** die Montagehilfe eine im Wesentlichen in radialer Richtung innerhalb des wenigstens einen Zahns (7) angeordnete Eingriffsöffnung (2) und eine im Wesentlichen in radialer Richtung innerhalb eines zu dem wenigstens einen Zahn (7) benachbarten Zahns (8) angeordnete Eingriffsöffnung (3) umfasst.

9. Mitnehmerscheibe (31, 41) für Lamellenkupplungssysteme mit einer zum Einsetzen in eine Innenverzahnung eines Kupplungsgehäuses vorgesehenen Außenverzahnung, welche eine Mehrzahl von in im Wesentlichen gleichen Abstand zueinander an dem Außenumfang an der Mitnehmerscheibe (31, 41) angeordnete Zähne (37, 38, 39, 47, 48, 49) umfasst,
**dadurch gekennzeichnet, dass** anstelle von wenigstens einem der Zähne eine in Umfangrichtung wirkende Federeinrichtung (32, 42; 33, 43) eingesetzt ist.

10. Mitnehmerscheibe (31, 41) nach Anspruch 9,
**dadurch gekennzeichnet**, das die Federeinrichtung eine Spiralfeder (32, 33), eine Blattfeder (42, 43) oder dergleichen ist.

11. Mitnehmerscheibe (31, 41 ) nach Anspruch 9 oder 10,
**dadurch gekennzeichnet, dass** die Federeinrichtung außenumfangsseitig einen Zahn trägt.

12. Vorrichtung aufweisend ein Kupplungsgehäuse (4) und eine Mitnehmerscheibe (1) nach Anspruch 1.

13. Vorrichtung nach Anspruch 12,
**dadurch gekennzeichnet, dass** der wenigstens eine Zahn (7) in Richtung einer an der Mitnehmerscheibe (1) angreifenden Schubkraft versetzt (y) angeordnet ist.

14. Vorrichtung nach Anspruch 12 oder 13,
**dadurch gekennzeichnet, dass** der wenigstens eine Zahn (7) mindestens um ein maximales Verdrehflankenspiel (Δy₁ + Δy₂) versetzt (y) angeordnet ist.

## Claims

1. Driving disc (1) for multiplate clutch systems, having an outer toothing (5) which is provided for being inserted into an inner toothing (6) of a clutch housing (4) and which comprises a multiplicity of teeth (7, 8, 9, 10, 11, 12, 13, 14) which are arranged at a substantially uniform interval (x) with respect to one another on the outer periphery (21) of the driving disc (1),
**characterized in that** at least one tooth (7) is arranged so as to be offset by a magnitude y in the circumferential direction with respect to adjacent teeth (8, 11), with intervals of the tooth (7) to the adjacent teeth (8, 11) being x+y and x-y respectively.

2. Driving disc (1) according to Claim 1,
**characterized in that** the at least one tooth (7) is arranged so as to be elastically resilient in the circumferential direction.

3. Driving disc (1) according to Claim 2,
**characterized in that** the elastically resilient arrangement is realized by means of substantially radially running incisions (22, 23), which separate the at least one tooth (7) from the adjacent teeth (8, 11), in the driving disc (1).

4. Driving disc (1) according to Claim 2 or 3,
**characterized in that** the elastically resilient arrangement is designed such that it can generate a preload between the outer toothing (5) and the inner toothing (6).

5. Driving disc (1) according to Claim 4,
**characterized in that** the preload is designed such that it can support an alternating idle torque.

6. Driving disc (1) according to one of Claims 2 to 5,
**characterized in that** the elastically resilient arrangement is designed so as to permit, in normal operation, an abutment of the respective thrust flanks of the teeth (15, 16, 17, 18, 19, 20) of the outer toothing (5) against the corresponding thrust flanks (24) of the teeth (7, 8, 9, 10, 11, 12, 13, 14) of the inner toothing (6) if the thrust moment is greater than the thrust moment component in idle operation.

7. Driving disc (1) according to one of the preceding claims,
**characterized in that** an assembly aid (2, 3) is provided which facilitates an insertion of the outer toothing (5) of the driving disc (1) into the inner toothing (6) of the clutch housing (4).

8. Driving disc (1) according to Claim 7,
**characterized in that** the assembly aid comprises an engagement opening (2) which is arranged substantially in the radial direction within the at least one tooth (7), and an engagement opening (3) which is arranged substantially in the radial direction within a tooth (8) which is adjacent to the at least one tooth (7).

9. Driving disc (31, 41) for multiplate clutch systems, having an outer toothing which is provided for being inserted into an inner toothing of a clutch housing and which comprises a multiplicity of teeth (37, 38, 39, 47, 48, 49) which are arranged at a substantially uniform interval with respect to one another on the outer periphery of the driving disc (31, 41),
**characterized in that** a spring device (32, 42; 33, 43) which acts in the circumferential direction is inserted instead of at least one of the teeth.

10. Driving disc (31, 41) according to Claim 9,
**characterized in that** the spring device is a spiral spring (32, 33), a leaf spring (42, 43) or the like.

11. Driving disc (31, 41) according to Claim 9 or 10,
**characterized in that** the spring device supports a tooth at the outer circumferential side.

12. Device having a clutch housing (4) and a driving disc (1) according to Claim 1.

13. Device according to Claim 12,
**characterized in that** the at least one tooth (7) is arranged so as to be offset (y) in the direction of a thrust force which engages on the driving disc (1).

14. Device according to Claim 12 or 13,
**characterized in that** the at least one tooth (7) is arranged so as to be offset (y) at least by a maximum rotational flank play (Δy₁+Δy₂).

## Revendications

1. Plateau d'entraînement (1) pour systèmes d'embrayage multi-disques, comprenant une denture extérieure (5) prévue pour être insérée dans une denture intérieure (6) d'une boîte d'embrayage (4), ladite denture extérieure (5) présentant une pluralité de dents (7, 8, 9, 10, 11, 12, 13, 14) disposées essentiellement à la même distance (x) les unes des autres sur la périphérie extérieure (21) du plateau d'entraînement (1),
**caractérisé en ce qu'**au moins une dent (7) est disposée de manière décalée dans la direction périphérique d'une valeur y par rapport aux dents adjacentes (8, 11), les distances entre la dent (7) et les dents adjacentes (8, 11) valant x+y ou x-y.

2. Plateau d'entraînement (1) selon la revendication 1, **caractérisé en ce que** l'au moins une dent (7) est disposée de manière élastiquement flexible dans la direction périphérique.

3. Plateau d'entraînement (1) selon la revendication 2,
**caractérisé en ce que** l'agencement élastiquement flexible est réalisé au moyen d'entailles (22, 23) dans le plateau d'entraînement (1), qui s'étendent essentiellement radialement et qui séparent l'au moins une dent (7) des dents adjacentes (8, 11).

4. Plateau d'entraînement (1) selon la revendication 2 ou 3,
**caractérisé en ce que** l'agencement élastiquement flexible est réalisé de manière à pouvoir causer une précontrainte entre la denture extérieure (5) et la denture intérieure (6).

5. Plateau d'entraînement (1) selon la revendication 4, **caractérisé en ce que** la précontrainte est conçue de manière à pouvoir supporter un couple de changement au ralenti.

6. Plateau d'entraînement (1) selon l'une quelconque des revendications 2 à 5, **caractérisé en ce que** l'agencement élastiquement flexible, pendant le fonctionnement normal, est conçu de manière à permettre une application des flancs de poussée respectifs des dents (15, 16, 17, 18, 19, 20) de la denture extérieure (5) contre les flancs de poussée correspondants (24) des dents (7, 8, 9, 10, 11, 12, 13, 14) de la denture intérieure (6), au cas où le couple de poussée serait supérieur à la proportion du couple de poussée pendant le fonctionnement au ralenti.

7. Plateau d'entraînement (1) selon l'une quelconque des revendications précédentes, **caractérisé en ce qu'**il est prévu un auxiliaire de montage (2,3) qui facilite l'insertion de la denture extérieure (5) du plateau d'entraînement (1) dans la denture intérieure (6) de la boîte d'embrayage (4).

8. Plateau d'entraînement (1) selon la revendication 7, **caractérisé en ce que** l'auxiliaire de montage comprend une ouverture d'engagement (2) disposée essentiellement dans la direction radiale à l'intérieur de l'au moins une dent (7) et une ouverture d'engagement (3) disposée essentiellement dans la direction radiale à l'intérieur d'une dent (8) adjacente à l'au moins une dent (7).

9. Plateau d'entraînement (31, 41) pour systèmes d'embrayage multi-disques, comprenant une denture extérieure prévue pour être insérée dans une denture intérieure d'une boîte d'embrayage, ladite denture extérieure présentant une pluralité de dents (37, 38, 39, 47, 48, 49) disposées essentiellement à la même distance les unes des autres sur la périphérie extérieure du plateau d'entraînement (31, 41),
**caractérisé en ce qu'**au lieu d'au moins l'une des dents, on utilise un dispositif de ressort (32, 42; 33, 43) agissant dans la direction périphérique.

10. Plateau d'entraînement (31, 41) selon la revendication 9, **caractérisé en ce que** le dispositif de ressort est un ressort en spirale (32, 33), un ressort à lame (42, 43) ou similaire.

11. Plateau d'entraînement (31, 41) selon la revendication 9 ou 10,
**caractérisé en ce que** le dispositif de ressort porte une dent du côté de la périphérie extérieure.

12. Dispositif présentant une boîte d'embrayage (4) et un plateau d'entraînement (1) selon la revendication 1.

13. Dispositif selon la revendication 12, **caractérisé en ce que** l'au moins une dent (7) est disposée de manière décalée (y) dans la direction d'une force de poussée s'exerçant sur le plateau d'entraînement (1).

14. Dispositif selon la revendication 12 ou 13,
**caractérisé en ce que** l'au moins une dent (7) est disposée de manière décalée (y) au moins suivant un jeu angulaire maximum de flanc (Δy₁ +Δy₂).
